# EUROPEAN PATENT APPLICATION

(11) **EP 3 335 916 A1**
(43) Date of publication of application: **20.06.2018**
(21) Application number: 16203812.9
(22) Date of filing: 13.12.2016
(51) Int. Cl.: B60F 5/02, B64C 37/00

(54) **ACCELERATION CONTROL FOR A CONVERTIBLE AIR - ROAD VEHICLE**

(71) Applicant: AeroMobil R&D, s. r. o., 82106 Bratislava-mestska cast Podunajske Biskupice (SK)
(72) Inventor: KLEIN, Stefan, 949 01 Nitra (SK); MACANDREW, Doug, 841 06 Bystrica (SK); ROOMS, Simon, 841 02 Bratislava (SK); URIK, Tomas, 908 41 Sastin-Straze (SK); ROACH, Alan, 0788 Oslo (NO); CLARK, Ian, Faringdon, SN7 8FA (GB); RANDLE, Steve, Warwick, CV34 6UW (GB)
(74) Representative: Finnegan Europe LLP

(57) **Abstract**

A vehicle having a first configuration for road use and a second configuration for air use, comprising: road wheels; a traction drive propulsion unit for driving road wheels when in contact with the ground; a thrust propulsion unit for driving a propeller to drive the vehicle through the air; and wherein, when the vehicle is configurable into any of: the first configuration, in which the traction drive propulsion unit is engaged to drive the road wheels on the ground, and the thrust propulsion unit is disengaged from the propeller; the second configuration, in which the traction drive propulsion unit is disengaged such that no drive is provided to the road wheels, and the thrust propulsion unit is engaged with the propeller to drive the vehicle thorough the air; or an intermediate configuration in which the traction drive propulsion unit is engaged to drive the road wheels on the ground, and the thrust propulsion unit is engaged with the propeller to drive the vehicle through the air. A method of operating the vehicle comprises: placing the vehicle in the intermediate configuration with the road wheels in contact with the ground; operating the thrust propulsion unit to drive the propeller, and simultaneously operating the traction drive propulsion unit to drive the wheels, so as to accelerate the vehicle to a predetermined airspeed; and disengaging the traction drive propulsion unit such that no drive is provided to the road wheels, and the propeller drives the vehicle thorough the air.

## Description

### FIELD OF THE INVENTION

This invention relates to vehicles configurable for air or road use. Such vehicles are commonly known as flying cars or roadable aircraft (hereafter "flying cars"). In particular, the invention relates to operational control of such a vehicle when accelerating.

### BACKGROUND

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/03240, WO 2016/057003, WO 2016/057004), and the Moller Skycar (http://moller.com/).

One particular issue faced by flying cars is that aerodynamic thrust for flight use is typically provided by propellers or fans (the term "propellers" is used for both). The efficiency of a propeller is dependent on its forward velocity through the air so when the vehicle is stationary or at low speed, the propeller is relatively inefficient at providing thrust to accelerate the vehicle to the airspeed necessary to provide sufficient lift to take off. This is turn determines the distance the vehicle must travel before it can safely lift off the ground.

As flying cars need to be compliant with road use regulations, particularly with regard to safety, they are often heavier than comparatively sized aircraft. This also tends to increase the minimum airspeed for safe lift off, which in turn tends to lead to a longer takeoff run.

This invention attempts to address problems in accelerating the vehicle during the take off stage of operation.

### SUMMARY

A first aspect of the invention provides a vehicle having a first configuration for road use and a second configuration for air use, comprising:
road wheels;
a traction drive propulsion unit for driving road wheels when in contact with the ground;
a thrust propulsion unit for driving a propeller to drive the vehicle through the air; and
wherein, when the vehicle is configurable into any of:
the first configuration, in which the traction drive propulsion unit is engaged to drive the road wheels on the ground, and the thrust propulsion unit is disengaged from the propeller;
the second configuration, in which the traction drive propulsion unit is disengaged such that no drive is provided to the road wheels, and the thrust propulsion unit is engaged with the propeller to drive the vehicle thorough the air; or an intermediate configuration in which the traction drive propulsion unit is engaged to drive the road wheels on the ground, and the thrust propulsion unit is engaged with the propeller to drive the vehicle through the air.

The traction drive propulsion unit can comprise an electric motor connected to each driven wheel. An internal combustion engine can be provided, connected to the propeller to define the thrust propulsion unit, and connected to an electrical generator to provide electric power to the motors connected to the driven wheels.

In some embodiments, the road wheels are moveable between a first, extended position for use when the vehicle is in the first configuration, or is in the intermediate configuration; and a second, retracted position for use when the vehicle is in the second configuration and in flight.

A further aspect of the invention provides a method of operating a vehicle according to the first aspect, comprising:
placing the vehicle in the intermediate configuration with the road wheels in contact with the ground;
operating the thrust propulsion unit to drive the propeller, and simultaneously operating the traction drive propulsion unit to drive the wheels, so as to accelerate the vehicle to a predetermined airspeed; and
disengaging the traction drive propulsion unit such that no drive is provided to the road wheels, and the propeller drives the vehicle thorough the air.

In some embodiments, the method further comprises modulating the power provided by the traction drive propulsion unit to the wheels according to the airspeed of the vehicle. For example, the modulation can comprise reducing the power provided by the traction drive propulsion unit to the wheels as the airspeed of the vehicle increases.

The vehicle can comprise a body, wings connected to the body and moveable between a folded position for the first configuration and an extended position for the second configuration, a tail section at the rear of the body, and moveable control surfaces for controlling operation of the vehicle in the air. For example, the wings can be movable between a folded position in which they lie adjacent the body for road use, and an extended position in which they project from the body for air use

Further variations can be made within the scope of the invention.

### DRAWINGS

Figure 1 shows a perspective view of a flying car in a flight configuration;
Figure 2 shoes a front perspective view of a flying car in a road use configuration; and
Figure 3 shows a schematic view of the driveline layout of the flying car of Figures 1 and 2.

### DETAILED DESCRIPTION

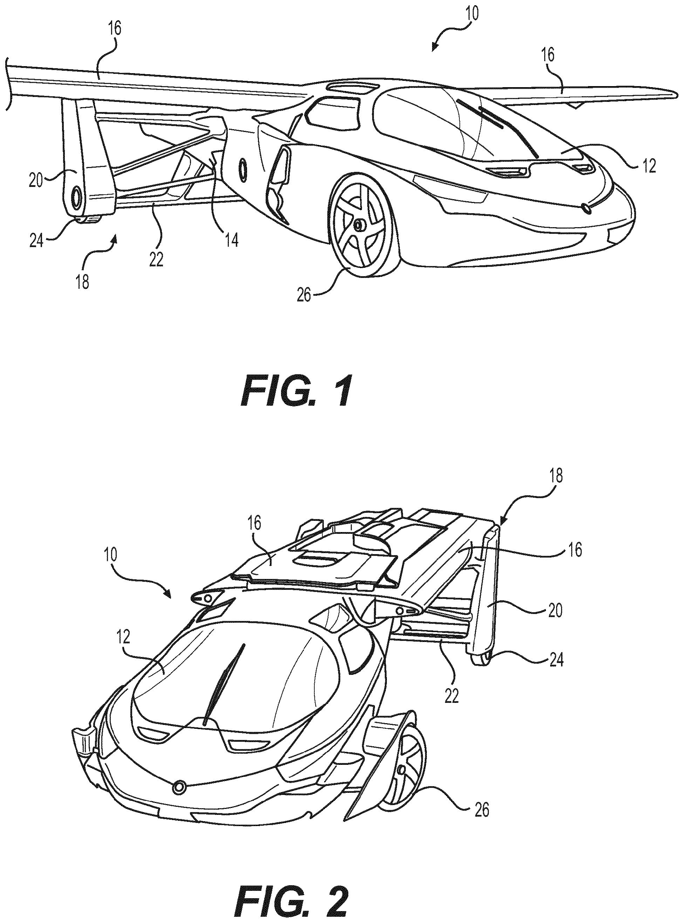

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing an engine and propeller shaft (not shown) that extends to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/03240.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use. Drive is provided to the front wheels by means of electric motors. There is one electric motor for each front wheel 26. The electric motors can be driven together, or can be controlled to provide different or vectors drive to each wheel, assisting in stability and steering.

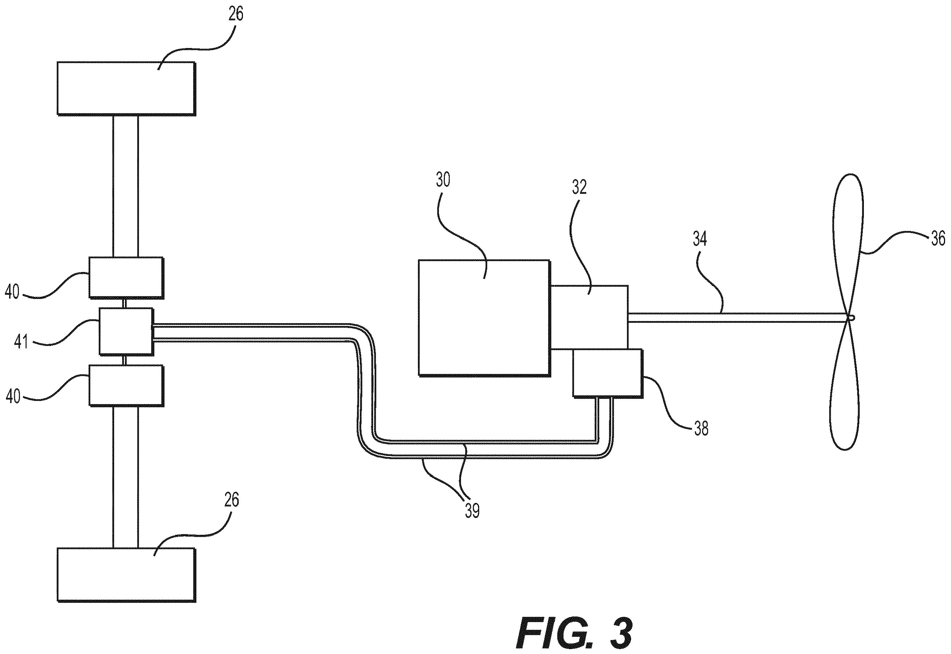

Figure 3 shows a schematic diagram of the driveline of the vehicle. The engine 30 comprises a conventional internal combustion engine, which is mounted in the body 10 behind the passenger compartment 12. A drive output from the engine 30 is connectable by means of a clutch mechanism 32 to a prop shaft 34 which extends to the rear of the body structure 14 where a propeller 36 is mounted to provide aerodynamic thrust. A further drive output from the engine 30 is connected to an electrical generator 38. The output of the electrical generator 38 provides power to charge batteries and/or provide power to electrical systems in the vehicle. (not shown). In addition, the electrical generator also provides power to via high voltage connections 39 to a high voltage controller/inverter 41 that is connected to electric motors 40, each of which is connected to drive a respective wheel 26 to provide traction drive. It will be appreciated that the position of the motors 40 can be selected to accommodate space and other design requirements. Operator control inputs (not shown) are provided to allow proper control of magnitude and direction of drive to the wheels 26, or of the magnitude of drive provided to the propeller, or both.

In operation for road use, the clutch mechanism 32 is disengaged so that no drive is provided to the propeller 36, which may be removed, folded or otherwise stowed to avoid damage or injury. The engine 30 drives the generator 38 to provide power to the wheel motors 40 under the control of the operator. While the motors will often operate in tandem, provided the same drive to each wheel, it is also possible to provide torque vectoring to avoid wheel spin, accommodate differential drive requirements, or otherwise aid in stability.

For air use, the wings 16 are extended and the propeller 38 is deployed. The clutch mechanism 32 is engaged so that the propeller 38 can be driven by the engine 30. In an intermediate configuration, the engine 30 drives the propeller 38 and the wheel motors 40 drive the wheels 26. In this way, the vehicle can be accelerated more quickly as the wheel drive is more effective to accelerate the vehicle on the ground at low speeds than the thrust provided by the propeller. As the vehicle accelerates on the ground, the airspeed increases and the propeller becomes more effective to provide thrust until the airspeed reaches a level sufficient speed to provide lift to take off. At this point, the wheels cannot provide drive and so the motors 40 are disengaged.

Once the propeller becomes efficient, drive from the wheel motors can be progressively decreased until the propeller becomes the sole means of driving the vehicle through the air (even if still in contact with the ground). At this point the vehicle can be controlled to lift off. Modulating control of drive to the wheel motors can be based on the output of an airspeed sensor. For example, at speed below a predetermined level, such as 80 kph, the wheel motors are fully operational to accelerate the vehicle along the ground. Above this speed, the propeller becomes more effective and drive to the wheel motors is progressively lowered to zero, after which thrust for final acceleration and takeoff is provided by the propeller alone.

Once the vehicle is aloft, the wheels 26 can be retracted to reduce drag.

For landing, the wheels 26 are once again extended and the vehicle controlled to land using propeller power. Once the wheels are detected as in contact with the ground, the electric motors can again become operable to assist in taxiing at speeds below the efficient working range of the propeller.

Changes can be made while remaining within the scope of the invention.

## Claims

1. A vehicle having a first configuration for road use and a second configuration for air use, comprising:
road wheels;
a traction drive propulsion unit for driving road wheels when in contact with the ground;
an thrust propulsion unit for driving a propeller to drive the vehicle through the air; and
wherein, when the vehicle is configurable into any of:
the first configuration, in which the traction drive propulsion unit is engaged to drive the road wheels on the ground, and the thrust propulsion unit is disengaged from the propeller;
the second configuration, in which the traction drive propulsion unit is disengaged such that no drive is provided to the road wheels, and the thrust propulsion unit is engaged with the propeller to drive the vehicle thorough the air; or
an intermediate configuration in which the traction drive propulsion unit is engaged to drive the road wheels on the ground, and the thrust propulsion unit is engaged with the propeller to drive the vehicle through the air.

2. A vehicle as claimed in claim 1, wherein the traction drive propulsion unit comprises an electric motor connected to each driven wheel.

3. A vehicle as claimed in claim 2, further comprising an internal combustion engine connected to the propeller to define the thrust propulsion unit, and connected to an electrical generator to provide electric power to the motors connected to the driven wheels.

4. A vehicle as claimed in claim 1, 2 or 3, wherein the road wheels are moveable between a first, extended position for use when the vehicle is in the first configuration, or is in the intermediate configuration; and a second, retracted position for use when the vehicle is in the second configuration and in flight.

5. A vehicle as claimed in any preceding claim, further comprising a body and a pair of wings, wherein the wings are movable between a folded position in which they lie adjacent the body for road use, and an extended position in which they project from the body for air use.

6. A method of operating a vehicle as claimed in any preceding claim, comprising:
placing the vehicle in the intermediate configuration with the road wheels in contact with the ground;
operating the thrust propulsion unit to drive the propeller, and simultaneously operating the traction drive propulsion unit to drive the wheels, so as to accelerate the vehicle to a predetermined airspeed; and
disengaging the traction drive propulsion unit such that no drive is provided to the road wheels, and the propeller drives the vehicle thorough the air.

7. A method as claimed in claim 6, further comprising modulating the power provided by the traction drive propulsion unit to the wheels according to the airspeed of the vehicle.

8. A method as claimed in claim 7, comprising reducing the power provided by the traction drive propulsion unit to the wheels as the airspeed of the vehicle increases.
